# EUROPEAN PATENT APPLICATION

(11) **EP 4 621 205 A1**
(43) Date of publication of application: **24.09.2025**
(21) Application number: 25159403.2
(22) Date of filing: 21.02.2025
(51) Int. Cl.: F02D 19/06, F02D 19/08, F02D 41/00, F02D 41/40

(54) **AMMONIA MIXED COMBUSTION ENGINE**

(30) Priority: 18.03.2024 JP 2024042189; 11.12.2024 JP 2024216238
(71) Applicant: Yanmar Holdings Co., Ltd., Osaka-shi, Osaka (JP)
(72) Inventor: MATSUNAGA, Daichi, Osaka (JP); TOSHINAGA, Kazuteru, Osaka (JP); HONDA, Yusuke, Osaka (JP); HIRAOKA, Kenji, Osaka (JP)
(74) Representative: Novagraaf International SA

(57) **Abstract**

[Problem] To provide an ammonia mixed combustion engine that enables operation at any ammonia mixed fuel burning ratio and can improve combustion stability and exhaust gas properties.

[Solution] An ammonia mixed combustion engine 1 that operates by burning ammonia and a hydrocarbon liquid fuel causes a control unit 2 to implement at least one of decrease or increase in an air excess ratio in fuel, advance or retard in injection timing of the liquid fuel, and decrease or increase in injection pressure of the liquid fuel in accordance with increase or decrease in a mixed fuel burning ratio of ammonia in the fuel.

## Description

### TECHNICAL FIELD

The present invention relates to an ammonia mixed combustion engine that operates by burning ammonia and a hydrocarbon liquid fuel.

### BACKGROUND ART

Conventionally, there is an ammonia mixed combustion engine that operates by burning ammonia and a hydrocarbon liquid fuel such as light oil. The ammonia mixed combustion engine requires improvement of the property of exhaust gas that is exhausted.

For example, an ammonia mixed combustion engine disclosed in Patent Document 1 includes a combustion chamber, an ammonia supplying means for supplying ammonia to the combustion chamber, an air supplying means for supplying air to the combustion chamber, a liquid fuel supplying means for supplying liquid fuel to the combustion chamber, a fuel ratio setting means for setting a ratio of a supply amount of ammonia to a total supply amount of the liquid fuel and ammonia, and a supply timing control means for controlling timing of liquid fuel supply by the liquid fuel supplying means in accordance with the ratio set by the fuel ratio setting means. The ammonia mixed combustion engine performs control such that the timing of the liquid fuel supply to the combustion chamber is made later than the timing at which the supply of ammonia and air starts, and the timing of the liquid fuel supply by the supply timing control means is advanced as the ratio of the ammonia supply amount set by the fuel ratio setting means is increased.

According to Patent Document 1, the supply timing control means causes the supply of liquid fuel by the liquid fuel supply means to inject the liquid fuel in multiple stages. In the ammonia mixed combustion engine, the advance for the liquid fuel supply timing is set in the range of -25° to -70° with respect to the engine's top dead center (TDC). The ratio of an ammonia supply amount to a total supply amount of liquid fuel and ammonia is between 1% and 95%.

### PRIOR ART DOCUMENT

### PATENT DOCUMENT

Patent Document 1: Japanese Patent Application Laid-open No. 2022-155927

### SUMMARY OF INVENTION

### TECHNICAL PROBLEM

In an ammonia mixed combustion engine, as the ammonia supply amount is increased to increase the mixed fuel burning ratio from 0 to 95%, combustion stability may decrease, exhaust gas properties may deteriorate, and the amount of NH₃ and N₂O contained in the exhaust gas may increase. In conventional ammonia mixed combustion engines such as the conventional ammonia mixed combustion engine disclosed in Patent Document 1, the timing of liquid fuel supply to the combustion chamber is controlled to improve the exhaust gas properties. However, simply controlling the timing of liquid fuel supply makes it difficult to increase the ammonia mixing ratio while also improving combustion stability and the exhaust gas properties.

An object of the present invention is to provide an ammonia mixed combustion engine that enables operation at any ammonia mixed fuel burning ratio and can improve combustion stability and exhaust gas properties.

### SOLUTION TO PROBLEM

In order to solve the above problem, an ammonia mixed combustion engine of the present invention is an ammonia mixed combustion engine that operates by burning ammonia and a hydrocarbon liquid fuel, and implements at least one of decrease or increase in an air excess ratio in fuel, advance or retard in injection timing of the liquid fuel, and decrease or increase in injection pressure of the liquid fuel in accordance with increase or decrease in a mixed fuel burning ratio of ammonia in the fuel.

### ADVANTAGEOUS EFFECTS OF INVENTION

According to the present invention, an ammonia mixed combustion engine that enables operation at any ammonia mixed fuel burning ratio and can improve combustion stability and exhaust gas properties is provided.

### BRIEF DESCRIPTION OF DRAWINGS

FIG. 1 is a schematic diagram illustrating an ammonia mixed combustion engine according to an embodiment of the present invention.
FIG. 2 is a graph illustrating a map of combustion instability in relation between an ammonia mixed fuel burning ratio and an air excess ratio in the ammonia mixed combustion engine.
FIG. 3 is a graph illustrating a map of combustion instability in relation between the liquid fuel injection timing and the excess air ratio in the ammonia mixed combustion engine.
FIG. 4 is a graph illustrating relation between the liquid fuel injection pressure and the combustion instability in the ammonia mixed combustion engine.
FIG. 5 is a graph illustrating a map of unburned ammonia in relation between the ammonia mixed fuel burning ratio and the air excess ratio in the ammonia mixed combustion engine.
FIG. 6 is a graph illustrating a map of N₂O in relation between the ammonia mixed fuel burning ratio and the air excess ratio in the ammonia mixed combustion engine.
FIG. 7 is a graph illustrating an example of the air excess ratio set for the ammonia mixed fuel burning ratio in the ammonia mixed combustion engine according to the embodiment of the present invention.
FIG. 8 is a graph illustrating an example of liquid fuel injection timing set for the ammonia mixed fuel burning ratio in the ammonia mixed combustion engine according to the embodiment of the present invention.
FIG. 9 is a graph illustrating an example of the liquid fuel injection pressure set for the ammonia mixed fuel burning ratio in the ammonia mixed combustion engine according to the embodiment of the present invention.
FIG. 10 is a schematic diagram illustrating an ammonia mixed combustion engine according to another embodiment of the present invention.
FIG. 11 is a graph illustrating a map of unburned ammonia in relation between a combustion temperature and a fuel-air equivalence ratio in the ammonia mixed combustion engine.
FIG. 12 is a graph illustrating a map of N₂O in relation between the combustion temperature and the fuel-air equivalence ratio in the ammonia mixed combustion engine.

### DESCRIPTION OF EMBODIMENTS

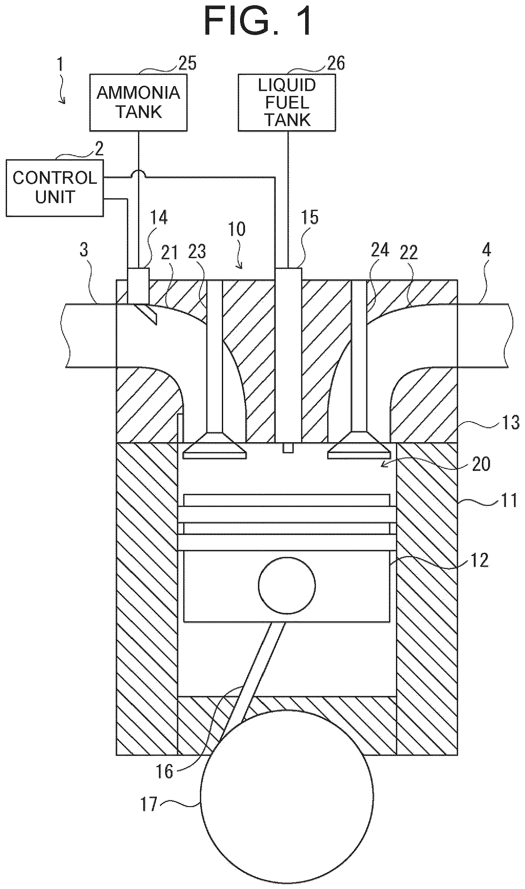

An ammonia mixed combustion engine 1 according to an embodiment of the present invention will be described with reference to the drawings. The ammonia mixed combustion engine 1 (engine) is one that operates by burning at least one fuel, including ammonia and a hydrocarbon liquid fuel such as light oil. The ammonia mixed combustion engine 1 controls the supply of ammonia and liquid fuel by the control unit 2. The ammonia mixed combustion engine 1 includes a plurality of cylinders 10 in a cylinder block (not illustrated), but only one cylinder 10 is illustrated in FIG. 1. As illustrated in FIG. 1, each cylinder 10 includes a cylinder 11, a piston 12, a cylinder head 13, an ammonia supply device 14, and a liquid fuel supply device 15.

The cylinder 11 is formed, for example, in a cylindrical shape within the cylinder block, the piston 12 is slidably housed within the cylinder 11, and the cylinder head 13 is mounted on the upper side of the cylinder 11. In the cylinder 11, a combustion chamber 20 is formed between the piston 12 and the cylinder head 13.

Below the cylinder 11, the piston 12 is coupled to a crankshaft 17 via a connecting rod 16, and the reciprocating motion of the piston 12 is converted into the rotational motion of the crankshaft 17 via the connecting rod 16.

In addition, the cylinder head 13 has an intake port 21 and an exhaust port 22 that communicates with the combustion chamber 20 of the cylinder 11, and includes an intake valve 23 and an exhaust valve 24 that open and close the intake port 21 and the exhaust port 22, respectively, with respect to the combustion chamber 20.

The intake port 21 is connected to an intake passage 3 and introduces air supplied from the intake passage 3 into the combustion chamber 20, and the exhaust port 22 is connected to an exhaust passage 4 and discharges exhaust gas generated in the combustion chamber 20 into the exhaust passage 4. The intake air can be drawn into the combustion chamber 20 through the intake port 21 by opening of the intake valve 23, while the exhaust gas generated in the combustion chamber 20 can be exhausted through the exhaust port 22 by opening of the exhaust valve 24.

Although FIG. 1 illustrates an example in which the intake passage 3 and the intake port 21 are directly connected, an intake manifold having a branch flow path which branches from the intake passage 3 to the plurality of cylinders 10 may be provided between the intake passage 3 and the cylinder head 13 in order to connect the intake passage 3 and each intake port 21 of the plurality of cylinders 10. In addition, although FIG. 1 illustrates an example in which the exhaust passage 4 and the exhaust port 22 are directly connected, in a case where the exhaust passage 4 and each exhaust port 22 of the plurality of cylinders 10 are connected, an exhaust manifold having a branch flow path which branches from the exhaust passage 4 to the plurality of cylinders 10 may be provided between the exhaust passage 4 and the cylinder head 13.

The ammonia supply device 14 is controlled by the control unit 2 and supplies ammonia supplied from an ammonia tank 25, which stores ammonia, to the combustion chamber 20. For example, the ammonia supply device 14 is composed of a gas admission valve, a gas injector, and the like.

FIG. 1 illustrates an example in which the ammonia supply device 14 is provided in the intake port 21 to inject ammonia into the intake port 21, and the ammonia is supplied to the combustion chamber 20 through the intake port 21. Alternatively, the ammonia supply device 14 may be provided in the intake passage 3 and inject ammonia into the intake passage 3 to supply ammonia to the combustion chamber 20 through the intake passage 3 and the intake port 21, or the ammonia supply device 14 may be provided in the cylinder 11 or the cylinder head 13 and inject ammonia directly into the combustion chamber 20.

An air-fuel mixture of air supplied from the intake passage 3 and ammonia supplied by the ammonia supply device 14, an injection amount of which is controlled by the control unit 2, is supplied from the intake port 21 to the combustion chamber 20, and an air excess ratio is controlled. In addition to the injection amount of ammonia, the ammonia supply device 14 is controlled by the control unit 2 with respect to the injection pressure, injection timing, and the like.

The liquid fuel supply device 15 is controlled by the control unit 2 to supply liquid fuel supplied from a liquid fuel tank 26, which stores hydrocarbon liquid fuel such as light oil, to the combustion chamber 20. For example, the liquid fuel supply device 15 is composed of a device such as a micropilot type injector that injects a small amount of liquid fuel.

FIG. 1 illustrates an example in which the liquid fuel supply device 15 is provided in the cylinder head 13 and supplies liquid fuel by directly injecting the liquid fuel into the combustion chamber 20. Alternatively, the liquid fuel supply device 15 may be provided in the intake port 21 and inject the liquid fuel into the intake port 21 to supply the liquid fuel to the combustion chamber 20 through the intake port 21, or the liquid fuel supply device 15 may be provided in the intake passage 3 and inject the liquid fuel into the intake passage 3 to supply the liquid fuel to the combustion chamber 20 through the intake passage 3 and the intake port 21.

The liquid fuel supply device 15 is controlled by the control unit 2 with respect to the injection amount, the injection pressure, the injection timing, and the like of. The liquid fuel supply device 15 compresses, ignites, and burns the mixture of ammonia and air in the combustion chamber 20 with the hydrocarbon liquid fuel.

The control unit 2 is a computer such as an Engine Control Unit (ECU) that controls the operation of the ammonia mixed combustion engine 1, and is mounted with a CPU, a ROM, a RAM, and the like, and is configured to control each part of the ammonia mixed combustion engine 1. The control unit 2 may store various programs for controlling the ammonia mixed combustion engine 1, and may control the ammonia mixed combustion engine 1 by reading and executing the programs.

Now, supply control of ammonia and liquid fuel in the ammonia mixed combustion engine 1 will be described.

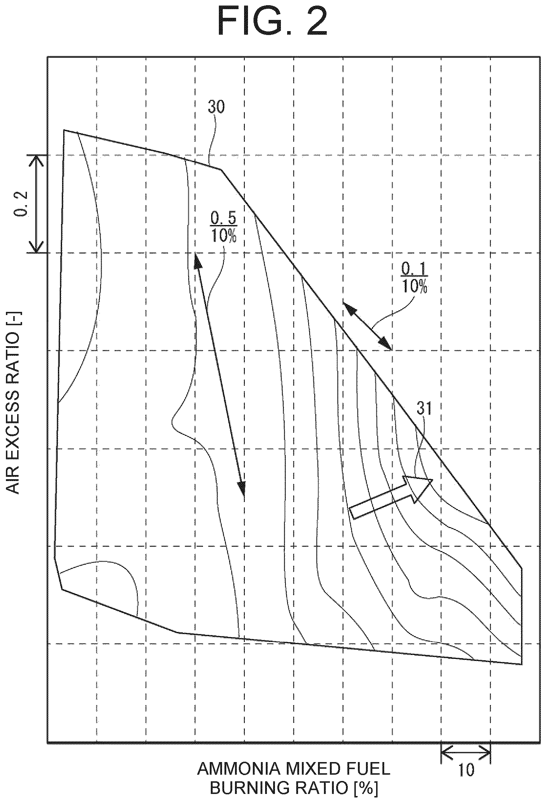

In FIG. 2, a mixed fuel burning ratio of ammonia burned in the combustion chamber 20 (a ratio of ammonia in the fuel consisting of ammonia and liquid fuel) is illustrated on a horizontal axis, and an air excess ratio to ammonia in the air-fuel mixture supplied to the combustion chamber 20 is illustrated on a vertical axis. FIG. 2 illustrates a stable region 30 in which the ammonia mixed combustion engine 1 can be operated stably from a viewpoint of combustion stability, with respect to the relation between the ammonia mixed fuel burning ratio and the air excess ratio, and also illustrates a map of combustion instability within a range of the stable region 30, in which instability increases in the direction indicated by a white arrow 31. According to FIG. 2, in a case where the air excess ratio is relatively high, when the ammonia mixed fuel burning ratio becomes high, the combustion instability increases and the engine falls outside the stable region 30. Therefore, the higher the ammonia mixed fuel burning ratio becomes, the lower the air excess ratio is made, so that it is possible to operate the ammonia mixed combustion engine 1 more stably.

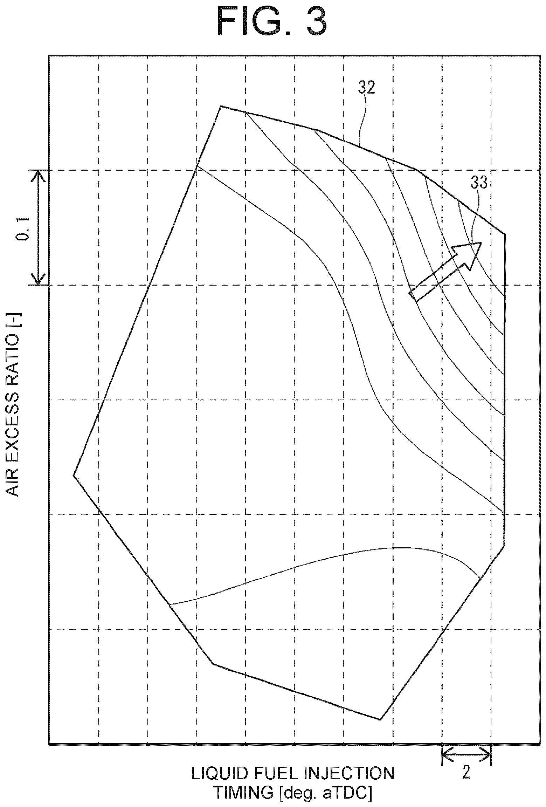

In FIG. 3, the injection timing of the liquid fuel into the combustion chamber 20 is illustrated on the horizontal axis, and the air excess ratio to ammonia in the air-fuel mixture supplied to the combustion chamber 20 is illustrated on the vertical axis. In addition, FIG. 3 illustrates the liquid fuel injection timing and a stable region 32 in which the ammonia mixed combustion engine 1 can be operated stably, with respect to the relation between the liquid fuel injection timing and the air excess ratio, and also illustrates a map of combustion instability within a range of the stable region 32, in which instability increases in the direction indicated by a white arrow 33. According to FIG. 3, in a case where the liquid fuel injection timing is relatively retarded, the combustion instability increases as the ammonia mixed fuel burning ratio increases. Therefore, the higher the ammonia mixed fuel burning ratio, the further the liquid fuel injection timing is advances, so that it is possible to operate the ammonia mixed combustion engine 1 more stably.

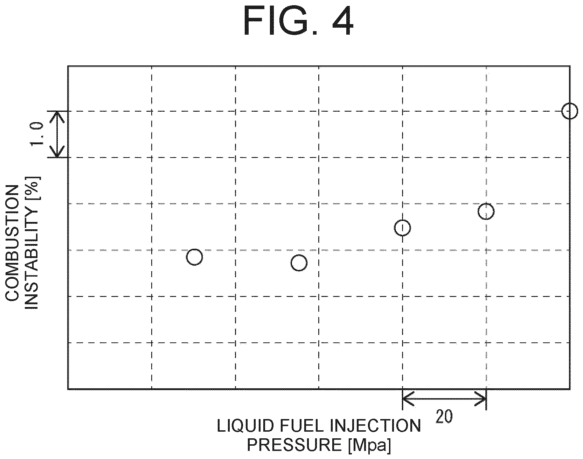

In FIG. 4, the injection pressure of the liquid fuel into the combustion chamber 20 is illustrated on a horizontal axis, and the combustion instability in the combustion chamber 20 (e.g., COV Pmax, which is an index of combustion instability) is illustrated on a vertical axis. According to FIG. 4, in a case where the liquid fuel injection pressure is relatively high, the combustion instability becomes high, and therefore by lowering the liquid fuel injection pressure, the ammonia mixed combustion engine 1 can be operated stably.

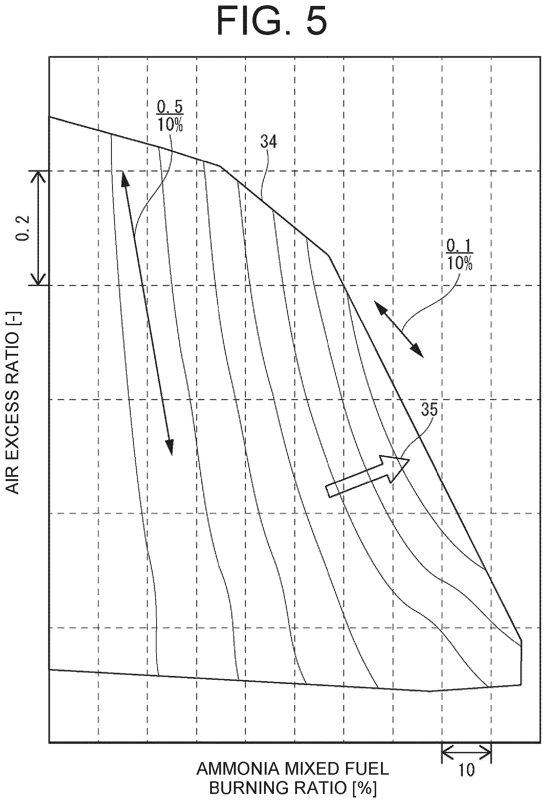

In FIG. 5, the mixed fuel burning ratio of ammonia burned in the combustion chamber 20 is illustrated on a horizontal axis, and the air excess ratio to ammonia in the air-fuel mixture supplied to the combustion chamber 20 is illustrated on a vertical axis. In addition, FIG. 5 illustrates a stable region 34 in which the ammonia mixed combustion engine 1 can be operated stably from a viewpoint of exhaust gas properties, with respect to the relation between the ammonia mixed fuel burning ratio and the air excess ratio, and also illustrates a map of unburned ammonia contained in the exhaust gas discharged from the combustion chamber 20 within a range of the stable region 34, in which an amount of unburned ammonia increases in the direction indicated by a white arrow 35. According to FIG. 5, in a case where the air excess ratio is relatively high, when the ammonia mixed fuel burning ratio becomes higher, the amount of unburned ammonia increases and the engine falls outside the stable region 34. Therefore, the higher the ammonia mixed fuel burning ratio becomes, the lower the air excess ratio is, so that unburned ammonia is decreased, and it is possible to operate the ammonia mixed combustion engine 1.

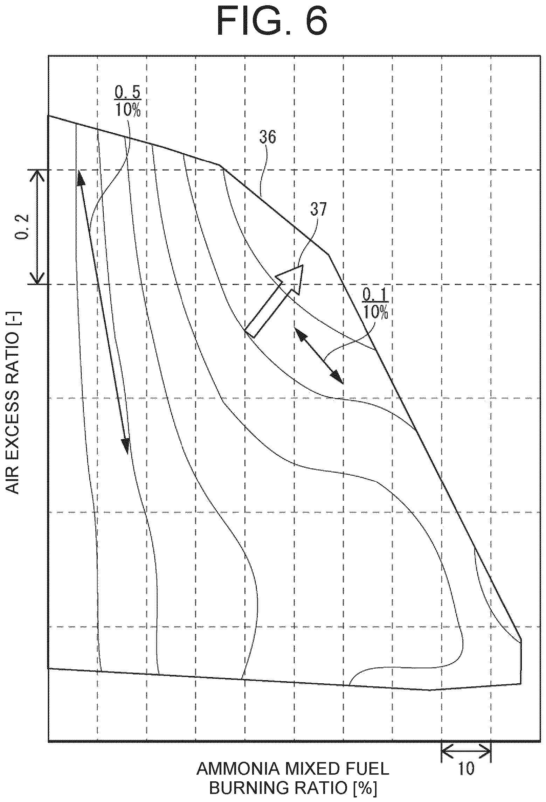

In FIG. 6, the mixed fuel burning ratio of ammonia burned in the combustion chamber 20 is illustrated on a horizontal axis, and the air excess ratio to ammonia in the air-fuel mixture supplied to the combustion chamber 20 is illustrated on a vertical axis. In addition, FIG. 6 illustrates a stable region 36 in which the ammonia mixed combustion engine 1 can be operated stably from a viewpoint of exhaust gas properties with respect to the relation between the ammonia mixed fuel burning ratio and the air excess ratio, and also illustrates a map of N₂O (nitrous oxide or nitrous oxide) contained in the exhaust gas discharged from the combustion chamber 20 within a range of the stable region 36, in which an amount of N₂O increases in the direction indicated by a white arrow 37. According to FIG. 6, in a case where the air excess ratio is relatively high, when the ammonia mixed fuel burning ratio becomes high, the amount of N₂O increases and the engine falls outside the stable region 36. Therefore, the higher the ammonia mixed fuel burning ratio is, the lower the air excess ratio is, so that N₂O is refused, and it is possible to operate the ammonia mixed combustion engine 1.

On the basis of the relations among the ammonia mixed fuel burning ratio, the air excess ratio, the liquid fuel injection timing, and the liquid fuel injection pressure in the ammonia mixed combustion engine 1 described above, the control unit 2 controls each parameter (the air excess ratio, the liquid fuel injection timing, the liquid fuel injection pressure) to simultaneously improve combustion stability and exhaust gas properties when operated with a given ammonia mixed fuel burning ratio. The control unit 2 controls such that at least one of decrease in the air excess ratio, advance (expedition) of the timing of the liquid fuel injection, and decrease in the injection pressure of liquid fuel is implemented in accordance with increase in the mixed fuel burning ratio of ammonia. In addition, in the ammonia mixed combustion engine 1 of this embodiment, for example, the ammonia mixed fuel burning ratio should be set to a value exceeding 0%, preferably about 5% or more.

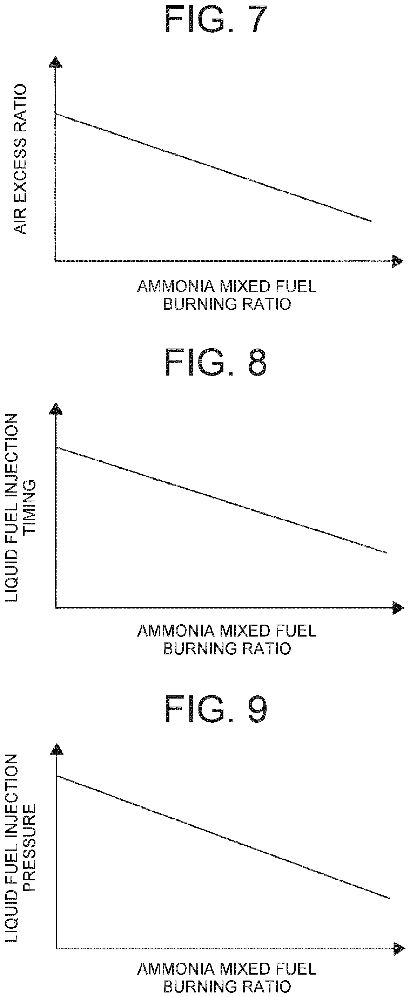

For example, the control unit 2 controls the supply of ammonia by ammonia supply device 14 and the intake of the air in the intake passage 3 so as to decrease the air excess ratio of the air-fuel mixture supplied to the combustion chamber 20 as the ammonia mixed fuel burning ratio is increased, as illustrated in FIG. 7. Specifically, the control unit 2 reduces the air excess ratio by 0.1 to 0.5, preferably by 0.1, while the mixed fuel burning ratio increases by 10%. The control unit 2 presets a minimum value for the air excess ratio (for example, 1.0) and reduces the air excess ratio to the minimum value. In addition, the control unit 2 may control the supply of ammonia by the ammonia supply device 14 and the intake of air in the intake passage 3 so as to increase the air excess ratio as the ammonia mixed fuel burning ratio decreases.

The control unit 2 controls the supply of liquid fuel by the liquid fuel supply device 15 so as to advance (expedite) the injection timing of the liquid fuel supplied to the combustion chamber 20 as the ammonia mixed fuel burning ratio is increased, as illustrated in FIG. 8. Specifically, the control unit 2 advances the liquid fuel injection timing by 0.1 to 5.0 deg., preferably by 1.1 deg., while the mixed fuel burning ratio increases by 10%. In addition, the control unit 2 may control the supply of liquid fuel by the liquid fuel supply device 15 so as to retard the liquid fuel injection timing as the ammonia mixed fuel burning ratio is reduced.

The control unit 2 controls the supply of liquid fuel by the liquid fuel supply device 15 so as to reduce the injection pressure of the liquid fuel supplied to the combustion chamber 20 as the ammonia mixed fuel burning ratio increases, as illustrated in FIG. 9. Specifically, the control unit 2 reduces the liquid fuel injection pressure by 1 to 30 MPa, preferably by 17 MPa, while the mixed fuel burning ratio increases by 10%. In addition, the control unit 2 may control the supply of liquid fuel by the liquid fuel supply device 15 so as to increase the liquid fuel injection pressure as the ammonia mixed fuel burning ratio is reduced.

The control unit 2 may control such that at least two of the air excess ratio, the liquid fuel injection timing, and the liquid fuel injection pressure are simultaneously implemented in accordance with increase or decrease in the mixed fuel burning ratio of ammonia. The control unit 2 may set priority order and control the air excess ratio, the liquid fuel injection timing, and the liquid fuel injection pressure in this order of priority.

As described above, according to the present invention, the ammonia mixed combustion engine 1, which operates by burning ammonia and a hydrocarbon liquid fuel, causes the control unit 2 to implement at least one of decrease or increase in the air excess ratio in the fuel, advance or retard in the injection timing of the liquid fuel, and decrease or increase in the injection pressure of the liquid fuel in accordance with increase or decrease in the mixed fuel burning ratio of ammonia in the fuel.

Consequently, according to the ammonia mixed combustion engine 1 of the present invention, even in a case where the ammonia mixed fuel burning ratio changes in accordance with change in an operation mode, it is possible to set an appropriate air excess ratio, liquid fuel injection timing, and/or liquid fuel injection pressure. Therefore, when the ammonia mixed combustion engine 1 is operated by burning ammonia and a hydrocarbon liquid fuel, the ammonia mixed combustion engine can operate at any ammonia mixed fuel burning ratio, while simultaneously improving combustion stability and exhaust gas properties. In addition, the ammonia mixed combustion engine 1 can improve product appeal regardless of the operation mode, even when the operation mode is selected in accordance with various remaining fuel amounts or a regulation of an operation area.

In addition, the ammonia mixed combustion engine 1 of the present invention reduces the air excess ratio by 0.1 to 0.5 while the ammonia mixed fuel burning ratio increases by 10% with the control unit 2. Consequently, in the ammonia mixed combustion engine 1, even in a case where the ammonia mixed fuel burning ratio is increased, it is possible to set an appropriate air excess ratio to simultaneously improve combustion stability and exhaust gas properties.

In addition, the ammonia mixed combustion engine 1 of the present invention advances the liquid fuel injection timing by 0.1 to 5.0 deg. while the ammonia mixed fuel burning ratio increases by 10% with the control unit 2. Consequently, in the ammonia mixed combustion engine 1, even in a case where the ammonia mixed fuel burning ratio is increased, it is possible to set an appropriate liquid fuel injection timing to simultaneously improve combustion stability and exhaust gas properties.

In addition, the ammonia mixed combustion engine 1 of the present invention reduces the liquid fuel injection pressure by 1 to 30 MPa while the ammonia mixed fuel burning ratio increases by 10% by the control unit 2. Consequently, in the ammonia mixed combustion engine 1, even in a case where the ammonia mixed fuel burning ratio is increased, it is possible to set appropriate liquid fuel injection pressure to simultaneously improve combustion stability and exhaust gas properties.

In addition, the ammonia mixed combustion engine 1 of the present invention simultaneously controls at least two of the air excess ratio, the liquid fuel injection timing, and the liquid fuel injection pressure by the control unit 2 in accordance with increase or decrease in the ammonia mixed fuel burning ratio. Consequently, the ammonia mixed combustion engine 1 can appropriately select the parameters that need to be set, from the air excess ratio, the liquid fuel injection timing, and the liquid fuel injection pressure in order to more appropriately balance combustion stability and exhaust gas properties in accordance with any ammonia mixed fuel burning ratio.

In the above embodiment, the example in which the control unit 2 controls the reduction in the air excess ratio, the advance of the liquid fuel injection timing, and/or the reduction in the liquid fuel injection pressure as the ammonia mixed fuel burning ratio increases is described, and FIG. 7, FIG. 8, and FIG. 9 illustrate examples in which the reduction in the air excess ratio, the advance of the liquid fuel injection timing, and/or the reduction in the liquid fuel injection pressure are performed in proportion to the increase in the ammonia mixed fuel burning ratio, but the present invention is not limited to the examples.

In another example, the control unit 2 may perform threshold determination of the ammonia mixed fuel burning ratio, and determine whether or not reduction in the air excess ratio, advance of the liquid fuel injection timing, and/or reduction in the liquid fuel injection pressure should be performed, depending on the result of the threshold determination. For example, the control unit 2 presets a plurality of levels of threshold values for the ammonia mixed fuel burning ratio, and presets the air excess ratio, the liquid fuel injection timing, and/or the liquid fuel injection pressure corresponding to each threshold level. The control unit 2 may compare the ammonia mixed fuel burning ratio with a plurality of threshold levels to determine which level the ammonia mixed fuel burning ratio corresponds to, and set the air excess ratio, the liquid fuel injection timing, and/or the liquid fuel injection pressure corresponding to the level determined as a result of the determination.

In the above embodiment, the example in which the ammonia mixed combustion engine 1 performs at least one of decrease or increase in the air excess ratio in the fuel, advance or retard in the injection timing of the liquid fuel, and decrease or increase in the injection pressure of the liquid fuel, by the control unit 2, in accordance with increase or decrease in the mixed fuel burning ratio of ammonia in the fuel is described. However, the present invention is not limited to this example.

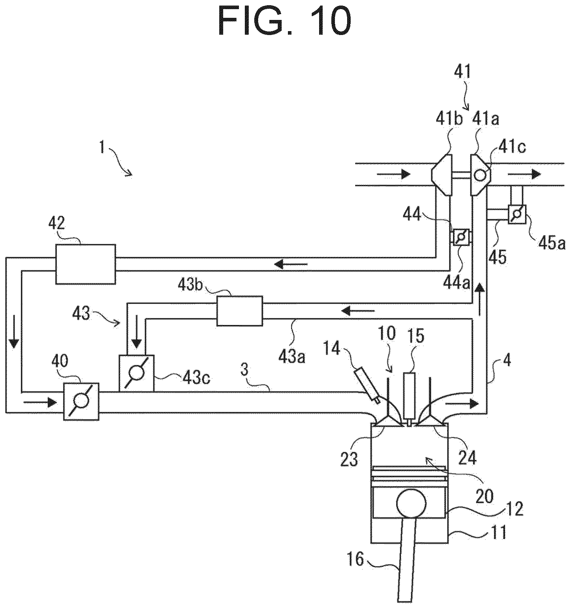

In another example, as illustrated in FIG. 10, an ammonia mixed combustion engine 1 includes an intake throttle 40, a turbocharger 41, an intercooler 42, and a recirculation device 43 (EGR device) in addition to the configuration of the above embodiment. The ammonia mixed combustion engine 1 further includes an intake bypass passage 44, and a waste gate 45.

The ammonia mixed combustion engine 1 implements at least one of increase in the temperature of air supplied from an intake passage 3 to each cylinder 10 (i.e., the intake air temperature), increase in the number of times of injection of liquid fuel by a liquid fuel supply device 15 in one combustion cycle of a piston 12 in each cylinder 10, change in valve closing timing of an intake valve 23 in each cylinder 10 toward the bottom dead center timing direction, increase in an amount of air bypassed from the intake passage 3 to an exhaust passage 4 by the intake bypass passage 44 (i.e., the intake bypass amount), change in the opening of the waste gate 45 of the turbocharger 41 to the valve opening direction, and increase in the passage area by adjustment of a variable nozzle 41c of the turbocharger 41, in accordance with increase in a mixed fuel burning ratio of ammonia in the fuel.

Specifically, the ammonia mixed combustion engine 1 is provided with the turbocharger 41, the intercooler 42, and the intake throttle 40, in this order from the upstream side in the intake direction of the intake passage 3.

The turbocharger 41 has a turbine 41a disposed in the exhaust passage 4 and a compressor 41b disposed in the exhaust passage 4, and the turbine 41a is provided with the variable nozzle 41c that adjusts the passage area of the exhaust gas which flows through the turbine 41a. The turbocharger 41 rotates the turbine 41a using the exhaust gas which circulates through the exhaust passage 4, and rotational force of the turbine 41a drives the compressor 41b, so that the air which flows through the intake passage 3 is compressed.

The recirculation device 43 includes a recirculation passage 43a, a recirculation cooler 43b, and a recirculation valve 43c. The recirculation passage 43a is connected to the exhaust passage 4 on the upstream side in the exhaust direction with respect to the turbocharger 41 (turbine 41a), and is connected to the intake passage 3 on the downstream side in the intake direction with respect to the intercooler 42. The recirculation device 43 cools the exhaust gas which circulates through the exhaust passage 4 on the upstream side in the exhaust direction with respect to the turbocharger 41 by using the recirculation cooler 43b, recirculates the exhaust gas, and supplies the exhaust gas to the intake passage 3 on the downstream side in the intake direction with respect to the intercooler 42. The recirculation device 43 adjusts the opening of the recirculation valve 43c by the control unit 2, and adjusts a flow rate of the recirculated exhaust gas which flows into the intake passage 3, so that an amount of oxygen in the air which flows into the intake passage 3 is adjusted.

In addition, the ammonia mixed combustion engine 1 is provided with the intake bypass passage 44 so as to bypass the downstream side in the intake direction of the intake passage 3 with respect to the turbocharger 41 and the upstream side in the exhaust direction of the exhaust passage 4 with respect to the turbocharger 41, and the intake bypass passage 44 is provided with an intake bypass valve 44a that adjusts an intake bypass amount. The ammonia mixed combustion engine 1 is provided with the waste gate 45 so as to bypass the upstream and downstream sides in the exhaust direction of the exhaust passage 4 with respect to the turbocharger 41, and the waste gate 45 is provided with a waste gate valve 45a that adjusts an exhaust bypass amount.

In the ammonia mixed combustion engine 1, the control unit 2 controls the intercooler 42 in accordance with increase in a mixed fuel burning ratio of ammonia in the fuel, and increases the temperature of the air supplied from the intake passage 3 to the cylinders 10 (i.e., the intake air temperature). Consequently, by increasing the temperature inside the cylinders 10, the combustion temperature in the combustion chamber 20 can be increased, and unburned ammonia and NOx (such as NH₃ and N₂O) in the exhaust gas can be reduced to achieve low emission.

Alternatively, in the ammonia mixed combustion engine 1, the control unit 2 controls the liquid fuel supply device 15 to increase the number of times of injection of liquid fuel from the liquid fuel supply device 15 during one combustion cycle of the piston 12 in each cylinder 10 in accordance with increase in the mixed fuel burning ratio of ammonia in the fuel. Consequently, the arrangement of the liquid fuel with respect to the combustion chamber 20 is optimized, so that the combustion temperature in the combustion chamber 20 can be increased, and unburned ammonia and NOx (such as NH₃ and N₂O) in the exhaust gas can be reduced, thereby achieving low emission.

Alternatively, in the ammonia mixed combustion engine 1, the control unit 2 controls the intake valve 23 in accordance with increase in the mixed fuel burning ratio of ammonia in the fuel, the valve closing timing of the intake valve 23 is changed toward the bottom dead center timing direction. Consequently, by increasing the effective compression ratio in the combustion chamber 20, the combustion temperature in the combustion chamber 20 can be increased, and unburned ammonia and NOx (such as NH₃ and N₂O) in the exhaust gas can be reduced, thereby achieving low emission.

Alternatively, the ammonia mixed combustion engine 1 increases the intake bypass amount in the intake bypass passage 44 by controlling the intake bypass valve 44a by the control unit 2 in accordance with increase in the mixed fuel burning ratio of ammonia in the fuel. Consequently, by decreasing the proportion of air in the intake air and increasing the proportion of fuel, the combustion temperature in the combustion chamber 20 can be raised, and unburned ammonia and NOx (such as NH₃ and N₂O) in the exhaust gas can be reduced, thereby achieving low emission.

Alternatively, the ammonia mixed combustion engine 1 controls the waste gate valve 45a by the control unit 2 in accordance with increase in the mixed fuel burning ratio of ammonia in the fuel, and changes the opening of the waste gate 45 to the valve opening direction. Consequently, the amount of residual gas is increased and an amount of air compressed in the turbocharger 41 is decreased, so that the proportion of air in the intake air can be decreased and the proportion of fuel can be increased, the combustion temperature in the combustion chamber 20 can be raised, and unburned ammonia and NOx (such as NH₃ and N₂O) in the exhaust gas can be reduced, thereby achieving low emission.

Alternatively, the ammonia mixed combustion engine 1 increases the passage area of the turbine 41a of the turbocharger 41 by adjusting the variable nozzle 41c by the control unit 2 in accordance with increase in the mixed fuel burning ratio of ammonia in the fuel. Consequently, the amount of the residual gas in the exhaust passage 4 is increased and the amount of the air compressed in turbocharger 41 is decreased, so that the proportion of the air in the intake air can be reduced, the proportion of the fuel can be increased, the combustion temperature in the combustion chamber 20 can be raised, and unburned ammonia and NOx (such as NH₃ and N₂O) in the exhaust gas can be reduced, thereby achieving low emission.

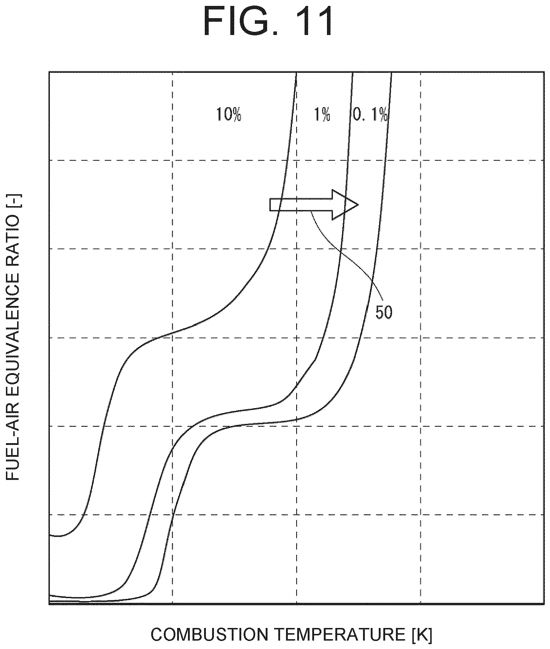

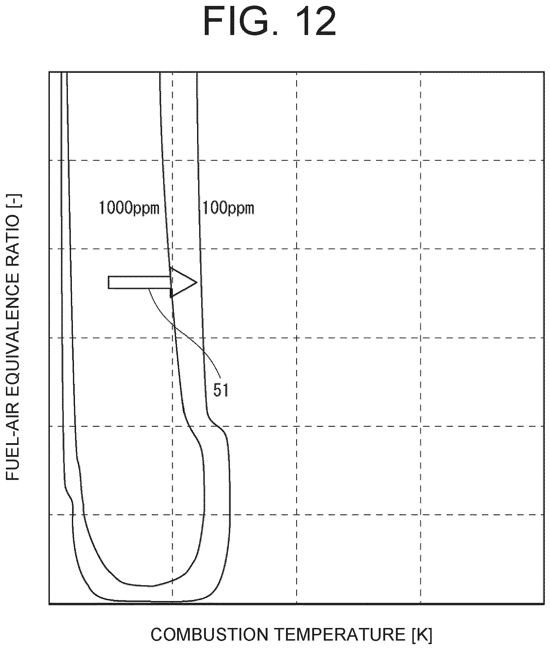

In FIG. 11 and FIG. 12, the combustion temperature in the combustion chamber 20 is illustrated on a horizontal axis, and a fuel-air equivalence ratio of fuel to air in an air-fuel mixture supplied to the combustion chamber 20 is illustrated on a vertical axis. FIG. 11 illustrates a map of unburned ammonia contained in exhaust gas of the ammonia mixed combustion engine 1 with respect to the relation between the combustion temperature and the fuel-air equivalence ratio, and the amount of unburned ammonia decreases in the direction indicated by a white arrow 50. FIG. 12 illustrates a map of N₂O contained in the exhaust gas of the ammonia mixed combustion engine 1 with respect to the relation between the combustion temperature and the fuel-air equivalence ratio, and N₂O decreases in the direction indicated by a white arrow 51. According to FIG. 11, the higher the combustion temperature is, the less unburned ammonia there is, and according to FIG. 12, the higher the combustion temperature is, the less N₂O there is.

Thus, according to another example, in accordance with increase in the mixed fuel burning ratio of ammonia in the fuel, exhaust gas properties can be improved by performing at least one of increase in the intake air temperature, increase in the number of times of liquid fuel injection in one combustion cycle, change in the closing timing of the intake valve 23 toward the bottom dead center timing direction, increase in an intake bypass amount, change in the opening of the waste gate 45 toward the valve opening direction, and increase in the passage area by adjusting the variable nozzle 41c.

The present invention may be modified as appropriate within the scope of the claims and the gist or idea of the invention that can be read from the entire specification, and an ammonia mixed combustion engine accompanied by such modifications is also included in the technical idea of the present invention.

### [Appendixes of Invention]

Hereinafter, an outline of the invention extracted from the above embodiment will be given. Each configuration and each processing function described in the following appendixes can be selected and combined arbitrarily.

### <Appendix 1>

An ammonia mixed combustion engine that operates by burning ammonia and a hydrocarbon liquid fuel,
the ammonia mixed combustion engine implementing at least one of decrease or increase in an air excess ratio in fuel, advance or retard in injection timing of the liquid fuel, and decrease or increase in injection pressure of the liquid fuel in accordance with increase or decrease in a mixed fuel burning ratio of ammonia in the fuel.

### <Appendix 2>

The ammonia mixed combustion engine mentioned in Appendix 1, wherein the air excess ratio is decreased by 0.1 to 0.5 while the mixed fuel burning ratio increases by 10%.

### <Appendix 3>

The ammonia mixed combustion engine mentioned in Appendix 1 or Appendix 2, wherein the injection timing is advanced by 0.1 to 5.0 deg. while the mixed fuel burning ratio increases by 10%.

### <Appendix 4>

The ammonia mixed combustion engine mentioned in any of Appendix 1 to Appendix 3, wherein the injection pressure is decreased by 1 to 30 MPa while the mixed fuel burning ratio increases by 10%.

### <Appendix 5>

The ammonia mixed combustion engine mentioned in any of Appendix 1 to Appendix 4, wherein at least two of the air excess ratio, the injection timing, and the injection pressure are simultaneously controlled in accordance with increase or decrease in the mixed fuel burning ratio.

### <Appendix 6>

An ammonia mixed combustion engine that operates by burning ammonia and a hydrocarbon liquid fuel, the ammonia mixed combustion engine implementing at least one of increase in an intake air temperature, increase in the number of times of injection of the liquid fuel in one combustion cycle, change in a closing timing of an intake valve toward a bottom dead center timing direction, increase in an intake bypass amount, change in opening of a waste gate of a turbocharger toward a valve closing direction, and decrease in a passage area by adjusting a variable nozzle of the turbocharger, in accordance with increase in a mixed fuel burning ratio of ammonia in fuel.

### REFERENCE SIGNS LIST

1 ammonia mixed combustion engine
2 control unit
3 intake passage
4 exhaust passage
10 cylinder
11 cylinder
12 piston
13 cylinder head
14 ammonia supply device
15 liquid fuel supply device
16 connecting rod
17 crankshaft
20 combustion chamber
21 intake port
22 exhaust port
23 intake valve
24 exhaust valve
25 ammonia tank
26 liquid fuel tank
40 intake throttle
41 turbocharger
41a turbine
41b compressor
41c variable nozzle
42 intercooler
43 recirculation device
43a recirculation passage
43b recirculation cooler
43c recirculation valve
44 intake bypass passage
44a intake bypass valve
45 waste gate
45a waste gate valve

## Claims

1. An ammonia mixed combustion engine that operates by burning ammonia and a hydrocarbon liquid fuel,
the ammonia mixed combustion engine implementing at least one of decrease or increase in an air excess ratio in fuel, advance or retard in injection timing of the liquid fuel, and decrease or increase in injection pressure of the liquid fuel in accordance with increase or decrease in a mixed fuel burning ratio of ammonia in the fuel.

2. The ammonia mixed combustion engine according to claim 1, wherein the air excess ratio is decreased by 0.1 to 0.5 while the mixed fuel burning ratio increases by 10%.

3. The ammonia mixed combustion engine according to claim 1, wherein the injection timing is advanced by 0.1 to 5.0 deg while the mixed fuel burning ratio increases by 10%.

4. The ammonia mixed combustion engine according to claim 1, wherein the injection pressure is decreased by 1 to 30 MPa while the mixed fuel burning ratio increases by 10%.

5. The ammonia mixed combustion engine according to claim 1, wherein at least two of the air excess ratio, the injection timing, and the injection pressure are simultaneously controlled in accordance with increase or decrease in the mixed fuel burning ratio.

6. An ammonia mixed combustion engine that operates by burning ammonia and a hydrocarbon liquid fuel, the ammonia mixed combustion engine implementing at least one of
increase in an intake air temperature, increase in the number of times of injection of the liquid fuel in one combustion cycle, change in a closing timing of an intake valve toward a bottom dead center timing direction, increase in an intake bypass amount, change in opening of a waste gate valve of a turbocharger toward a valve opening direction, and increase in a passage area by adjusting a variable nozzle of the turbocharger, in accordance with increase in a mixed fuel burning ratio of ammonia in fuel.
